# EUROPEAN PATENT SPECIFICATION

(11) **EP 2 403 651 B1**
(45) Date of publication and mention of the grant of the patent: **18.12.2019**
(21) Application number: 10749057.5
(22) Date of filing: 03.03.2010
(51) Int. Cl.: B05B 1/02, B05B 17/00, B05B 1/22

(54) **HIGH EFFICIENCY, MULTIPLE THROAT FLUIDIC OSCILLATOR**
HOCHEFFIZIENTER FLÜSSIGKEITSOSZILLATOR MIT MEHREREN EINGÄNGEN
OSCILLATEUR FLUIDIQUE À GORGES MULTIPLES DE GRANDE EFFICACITÉ

(30) Priority: 03.03.2009 US 380880
(43) Date of publication of application: 11.01.2012
(73) Proprietor: dlhBowles Inc., Canton, OH 44706 (US)
(72) Inventor: GOPALAN, Shridhar, Westminster MD 21157 (US); RUSSELL, Gregory, Catonsville MD 21228 (US); STEERMAN, Dan, Harpers Ferry WV 25425 (US)
(74) Representative: Stiel, Jürgen
(86) International application number: PCT/US2010/000663
(87) International publication number: WO 2010/101646

(56) References cited:
- WO-A1-2005/042169
- US-A- 5 063 786
- US-A1- 2007 295 840
- US-A1- 2008 011 868

## Description

### CROSS-REFERENCE TO RELATED APPLICATION

This application is a continuation-in-part of the present Assignee's pending patent applications U.S. Serial No. 11/245,396 - filed October 6, 2005 and U.S. Serial No. 11/805,802 - filed May 24, 2007.

### BACKGROUND OF THE INVENTION

### 1. FIELD OF THE INVENTION

This invention relates to fluid handling processes and apparatus. More particularly, this invention relates to fluidic oscillators and new methods and apparatus for improving their effective operating efficiencies.

### 2. DESCRIPTION OF THE RELATED ART

Fluidic inserts or oscillators are well known for their ability to provide a wide range of distinctive liquid sprays into surrounding ambient gaseous environments. The distinctiveness of these sprays is due to the fact that they are characterized by being oscillatory in nature, as compared to the relatively steady state flows that are emitted from standard spray nozzles.

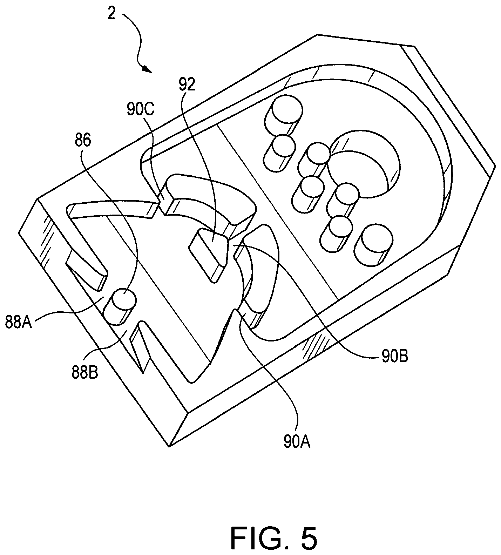

Figure 5 of the present Assignee's U.S. Patent No. (USPN) 4,052,002 illustrates the oscillatory nature of the spray from a typical fluidic oscillator. It shows what can be considered to be a representation, at a single instant in time, of the essentially temporally varying, two-dimensional, planar flow pattern of a liquid jet or spray that issues from the oscillator into a surrounding gaseous environment and breaks into droplets which are distributed transversely to the jet's general direction of flow. Such spray patterns may be described by the definable characteristics of their droplets (e.g., the volume flow rate of the spray, the spray's area of coverage or its fan angle, the spatial distribution of droplets in planes perpendicular to the direction of flow of the spray and at various distances in front of the oscillator's outlet, the average droplet velocities, the average size of the droplets, and the frequency at which the droplets impact on an obstacle in the path of the spray).

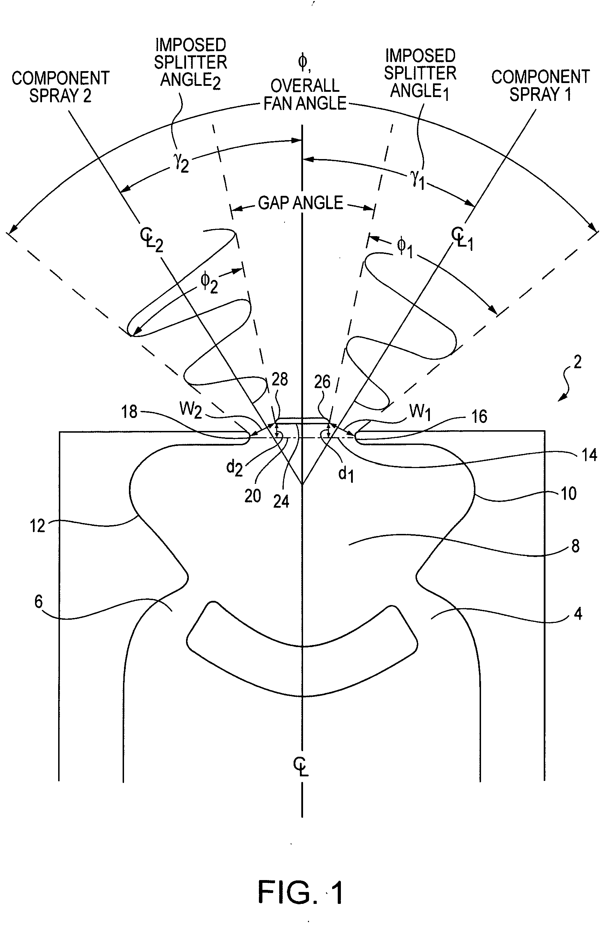

A fluidic insert is generally thought of as a thin, rectangular member that is molded or fabricated from plastic and has an especially-designed, uniform depth, liquid flow channel or fluidic circuit fabricated into either its broader top or bottom surface, and sometimes both. Pressurized liquid enters such an insert and is sprayed from it. See, for example the fluidic insert (18) and housing (10) in figure 1 of the present Assignee's USPN 7,014,131.

There are many well known designs of fluidic circuits that are suitable for use with such fluidic inserts. Many of these have some common features, including: (a) at least one power nozzle configured to greatly accelerate the movement of the liquid that flows under pressure through the insert so that it separates from the walls downstream of the power nozzle so as to form an essentially "free" jet downstream of the power nozzle (i.e., "free" in that the jet as it exits the power nozzle is not attached to the sidewalls that are attached to the edges of the power nozzle), (b) an interaction chamber through which the liquid flows and in which the flow phenomena (e.g., intermittent, alternating vortices in side-by-side locations within the chamber) is initiated that will eventually lead to the spray from the insert being of an oscillating nature, (c) a liquid inlet, (d) a pathway that connects the inlet and the power nozzle/s, and (e) one or more outlets or throats from which the liquid sprays from the insert - see USPN 4,231,519 for an example of a multiple throat oscillator.

Examples of fluidic circuits may be found in many patents, including the present Assignee's USPN 3,563,462 (Bauer), 4,052,002 (Stouffer & Bray), 4,151,955 (Stouffer), 4,157,161 (Bauer), 4,231,519 (Stouffer), which was reissued as RE 33,158, 4,508,267 (Stouffer), 5,035,361 (Stouffer), 5,213,269 (Srinath), 5,971,301 (Stouffer), 6,186,409 (Srinath) and 6,253,782 (Raghu).

Most fluidic oscillators and fluidic circuits are fabricated so as to have lateral symmetry about their centerlines. However, there are instances in which asymmetries are built into fluidic oscillators. For example, when it is desired to impose a yaw angle or outward or lateral horizontal deflection on the centerline of the spray that flows from an oscillator, it is known to fabricate such an oscillator with an asymmetry relative to its centerline. See the present Assignee's USPN 6,253,782.

As fluidic oscillators have continued to be used in more types of industrial applications, the need has been identified to improve upon their designs so as to enable them to achieve greater operating efficiencies and flow performances (e.g., higher mean exit velocities, larger fan angles and more uniform spatial distribution of their droplets). For example, for a certain size oscillator operating at a specified pressure to yield a spray having a required fan angle, a means is needed to modify such an oscillator so that its spray also has a higher mean velocity at the oscillator's exit.

### 3. OBJECTS AND ADVANTAGES

There has been summarized above, rather broadly, the prior art that is related to the present invention in order that the context of the present invention may be better understood and appreciated. In this regard, it is instructive to also consider the objects and advantages of the present invention.

It is an object of the present invention to provide an improved fluidic oscillator that can operate more efficiently than prior fluidic oscillators.

It is also an object of the present invention to provide fluidic oscillators that can provide specific types of desired sprays (e.g., those having higher mean exit velocities, larger fan angles and more uniform spatial distribution of their droplets) that have heretofore not been achievable with conventional fluidic technology.

It is a further object of the present invention to provide improved and more versatile fluidic inserts and their enclosures which are ideally designed for a wider, more demanding range of windshield washer applications.

It is an additional object of the present invention to provide improved enclosures and fluidic inserts that are ideally designed for an assortment of commercial cleaning applications.

It is an object of the present invention to provide enclosures for otherwise standard fluidic oscillators that allow a user to better direct and control the location of the areas being wetted by the sprays from such devices.

These and other objects and advantages of the present invention will become readily apparent as the invention is better understood by reference to the accompanying summary, drawings and the detailed description that follows.

### SUMMARY OF THE INVENTION

Recognizing the need for the development of improved fluidic oscillators and their enclosures, the present invention is generally directed to satisfying the needs set forth above and overcoming the limitations seen in the prior art devices and methods.

Claim 1 discloses a fluidic oscillator according to the invention. There are, of course, additional features of the invention that will be described hereinafter and which will form the subject matter of the later presented claims to this invention.

### BRIEF DESCRIPTION OF THE DRAWINGS

FIG. 1 shows an illustrative two-dimensional, preferred embodiment of the present invention.

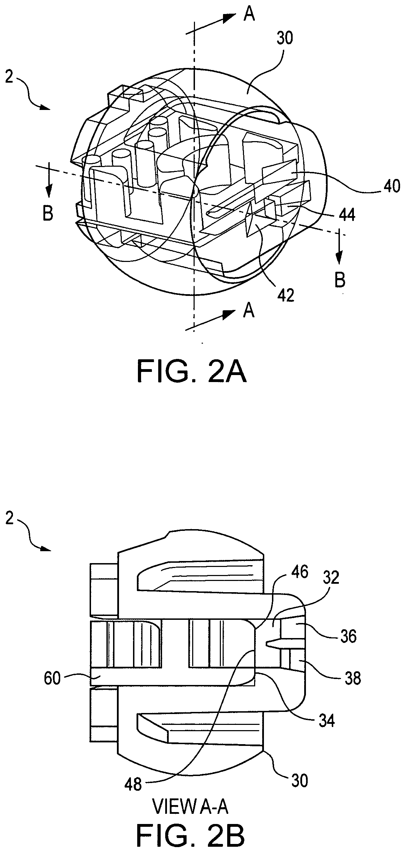

FIG. 2A (perspective) - 2B (vertical cross-sectional) show a preferred embodiment of the present invention in the form of a housing which has an especially configured front wall or face into which are molded a two-tiered and three-part throat (i.e., a single upper and two lower throats that are created by the use of a splitter downstream of the interaction chamber's lower outlet plane) followed by separate expansion passages. From the upper outlet there issues a spray that has a fan angle that is within the normal range (60 - 120 degrees), while the lower outlet issues a two-component spray whose total overall fan angle is considerably larger than normal (140 - 160 degrees) due to the splitter's imposed splitter yaw angles.

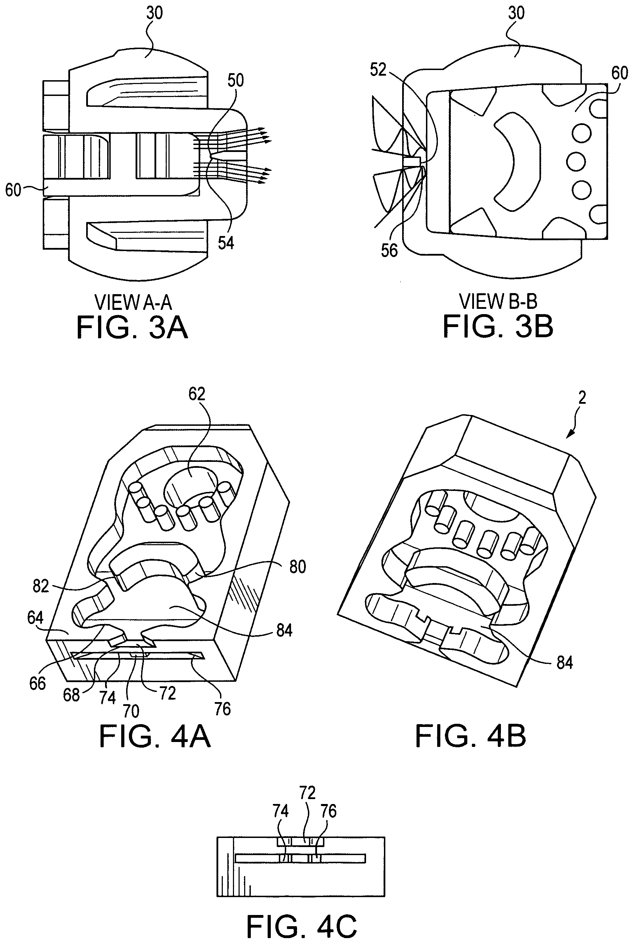

FIGS. 3A (vertical cross-sectional) and 3B (downward cross-sectional of the lower region of the two-tiered sprayer housing seen in FIG. 2) show the splitter yaw angles that are imposed on the component sprays of this configuration.
FIGS. 4A - 4C show a preferred embodiment of the present invention in the form of a fluidic insert which has an especially configured front wall or face into which is molded a single upper throat and, in its lower part, a downstream splitter that creates two effective lower throats that yield two component sprays that each have the same imposed splitter yaw angle.
FIG. 5 shows an embodiment that utilizes a downstream, round-shaped splitter to create two effective yawed throats, with each issuing a component spray that has an imposed splitter yaw angle. The upstream fluidic circuitry is also different in that it takes the form of what is known as a "three-jet, island" oscillator as compared to the "two-jet" or "mushroom" oscillator shown in FIGS. 1-4.

### DESCRIPTION OF THE PREFERRED EMBODIMENT

Before explaining at least one embodiment of the present invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

A common problem encountered in developing and producing fluidic oscillators or inserts for use in automotive windshield applications is designing a fluidic circuit which can give the desired spray characteristics (e.g., at flow rates of 400 ml/minute and operating pressures of 9 psig, uniform coverage with spray droplets of an 80 cm wide, target area located approximately 25 cm or further in front of the sprayer) and which can be fitted into a housing which is very limited on its allowable size. Because such housings often are situated in locations on an automobile's hood that are quite visible, their allowable dimensions are often dictated by aesthetic considerations (e.g., typical acceptable widths are on the order of 10 - 12 mm). The consequence of these constraints is that the spray from the windshield washers situated in such housings must have a comparative large horizontal fan angle, **φ** (i.e., defined by the lateral or horizontal boundaries of the region wetted by the spray), as well as large an exit velocity as possible so that its droplets can overcome the air drag that is placed on the spray's droplets by the oncoming wind created by the car's forward speed.

FIG. 1 shows an illustrative two-dimensional, preferred embodiment of the present invention. It is an improved fluidic oscillator **2** that operates on a pressurized liquid flowing through it to generate an oscillating spray of liquid droplets into a surrounding gaseous environment. The resulting overall spray is characterized by properties such as its overall horizontal fan angle, **φ**, mean exit velocity, V_{E}, and the uniformity of the spatial distribution of its droplets.

This oscillator **2** is of the type that has a centerline, C_{L}, and a pair of power nozzles **4, 6** (i.e., a means for inducing downstream oscillations in the liquid) that form from each of them a "free" jet (i.e., "free" in that the jet as it exits the power nozzle is not attached to the sidewalls that are attached to the edges of the power nozzle) that issues into an interaction chamber **8** through which the liquid flows and in which the flow phenomena (e.g., intermittent, alternating vortices in side-by-side locations within the chamber) is initiated that eventually leads to the spray from the oscillator or insert being of an oscillating nature.

It should be noted that while this embodiment uses a fluidic circuit that utilizes a pair of power nozzles as its means for generating the intermittent, alternating vortices in the oscillator's interaction chamber, there are many more types of fluidic circuits that could alternatively have been used in the present embodiment (see discussion of prior art) and all of these should be considered as part of the disclosure of the present invention.

This invention's interaction chamber is seen to have sidewalls **10, 12** that extend downstream and converge towards the oscillator's centerline so as to form an outlet **14** for the oscillator. This outlet can be considered to have a first **16** and a second **18** edge that are laterally spaced away from the oscillator centerline's and serve to define an oscillator outlet plane **20** that is generally perpendicular to the oscillator's centerline.

A novel splitter **22** (in this case a horizontal splitter, since the splitter splits the flow into right and left horizontally, oriented spray components) is seen to be located, in this instance, a short distance downstream of the oscillator's outlet plane **20.** This splitter has a generally flat surface **24** that faces primarily in the upstream direction towards the oscillator's interaction chamber **8.** The splitter also has an outer first (or right side) **26** and second (or left side) **28** edge, each of which is situated a specified first or second distance **d₁** or **d₂** downstream of the oscillator's outlet plane.

Depending on the width of the interaction chamber's outlet and the splitter's width, the splitter's first edge **26** is seen to be a specified distance or width **w₁** away from the chamber's first outlet edge **16.** These edges are seen to form an effective first throat for the oscillator that causes a portion of the liquid that flows through the outlet to split into what we have observed to be a first (or right side) component spray that flows from this first throat. Similarly, on the left side of this oscillator we see that splitter's second edge **28** is a specified distance or width **w₂** away from the chamber's second outlet edge **18** so as to form an effective second throat for the oscillator that causes the remaining portion of the liquid that flows through the outlet to issue a second (or left side) component spray from the oscillator's second effective throat.

For a wide range of operating conditions, we have experimentally (since the sprays oscillate at a prescribed frequency, one can use a stroboscope operating at this same frequency to illuminate the spray so as to identify the position of its outer boundaries) observed that this first component spray has a centerline C_{L1} that is normal to a straight line extending between this throat's edges **16, 26.** Thus, we observed that our use of this splitter in its current orientation is effectively imposing a first splitter (yaw) angle, γ₁, on its component spray and that sin γ₁ = d₁/w₁.

Similarly, on the left side of FIG. 1 we also see an effective second throat from which issues a second component spray that has a centerline C_{L2} that is normal to a straight line extending between this throat's edges **18, 28** and that this second component spray has an imposed second splitter (yaw) angle, γ₂, and that sin γ₂ = d₂/W₂.

As a result of our experimentation with a wide range of oscillators having varying sized power nozzles, outlets, splitters and splitter orientations, we have discovered that certain splitter locations are quite effective for yielding some rather surprising and advantageous spray phenomena. For example, we have observed that the improved oscillators (i.e., "split throat" oscillators) of the present invention are capable of achieving:
(1) Larger overall horizontal fan angles, at the same Area Ratios (where Area Ratio = TA/PA, and PA = the sum of the area of power nozzles **4** and **6;** TA = the sum the area of effective first and second throats created by the splitter) than standard oscillators. This is important since it is often an oscillator's Area Ratio that usually determines the required lateral dimension or width of an oscillator's interaction chamber (the widest part of the oscillator) and for which there is always in automotive or windshield washer applications a preference to make this width as small as possible so as to reduce the visual impact that such oscillators have on the appearance of an automotive hood on which they are mounted. Typical imposed splitter yaw angles to achieve these larger overall fan angles are usually in the range of 5 to 45 degrees.
(2) Higher oscillator exit velocities. For example, for a standard, two power nozzle, mushroom oscillator, it is known that to achieve a targeted 90 degree fan angle at a flow rate of 1000 mL/min and at 30 psig, one utilizes an oscillator having power nozzle and throat areas of 1.08 mm² (PA) and 1.59 mm² (TA), respectively. Dividing this flow rate by the area of its throat gives an average exit velocity of 10.5 m/s.

Meanwhile, we have seen that an improved oscillator of the present invention can achieve such an overall spray angle in either of two ways. It can impose a splitter yaw angle of 22.5 degree and utilize power nozzles and an appropriate sized and oriented splitter such that its power nozzle and throat areas are 1.44 mm² and 1.22 mm² respectively. Its average exit velocity is then seen to be 13.6 m/s, a 30% increase over that achieved with the standard mushroom.

Alternatively, the present invention can impose a splitter yaw angle of 27.5 degree and utilize power nozzles and an appropriate sized and oriented splitter such that its power nozzle and throat areas are 1.60 mm² and 1.07 mm², respectively, to yield an exit velocity of 15.6 m/s, a 49% increase over that achieved with the standard mushroom.

Note that in this instance, there will be a 20 degree gap angle between the inner edges or boundaries of the components sprays. Such a situation can yield an overall spray that will show some differences in the uniformity of the downstream spatial distribution of its droplets. However, when such differences can be accommodated (e.g., in windshield washer applications, where a high exit velocity is critical to combat the spray depressions experienced during the periods when the automobile is at high speeds), the utilization of such a splitter proves to be a very effective means for achieving higher oscillator exit velocities.

In additional experiments with the present invention, it was found possible to actually place such a splitter in front of the interaction chamber's outlet plane **20.** This resulted in situations in which the component sprays were actually yawed inwards and towards the oscillator's centerline and the observed gap angles were negative, indicating an overlapping of the component sprays as the flowed downstream.

Still further experiments with the present invention utilized splitters in which d₁ did not equal d₂ and/or w₁ did not equal w₂. All of these experiments showed related results in which the imposed yaw angles were seen to significantly impact the properties of the resulting component sprays.

While FIG. 1 shows the present invention utilizing only a single horizontal splitter (i.e., it splits the flow horizontally into yawed right- and left-side component sprays), it should be recognized that the scope of the present invention is such as to cover and include the use of a vertical splitter whose edges are electively downstream of the oscillator's outlet plane to split the flow from the oscillator outlet into a vertical, two-tiered, pitched (since we defined sprays whose centerlines were horizontally deflected to have been yawed, we refer to sprays whose centerlines are vertically deflected as having imposed "pitch" angles), upper and lower component sprays. The use of combinations (i.e., a vertical splitter with a horizontal splitter in its lower region) of such splitters then allows for the creation of tailored sprays that have three of more spray components.

Alternatively, a vertical splitter can be oriented such that its edges lie in the plane of outlet and still used to split the flow at the oscillator's outlet into a novel two-tiered, upper and lower component sprays whose centerlines are not pitched with respect to that of the oscillator's centerline.

Additionally, those who are familiar with fluidic oscillator technology will recognize that the housings or enclosures which are used with them are often a key component in the design of the overall assemblies in which fluidic oscillators are employed. See, for example, the fluidic insert or oscillator (18) that is front loaded into the housing (10) in figure 1 of the present Assignee's USPN 7,014,131 (note: in other situations, such housings can be fabricated to allow for the rear-loading of the oscillators).

Since it is known to construct such housings with a fluidic circuitry element fabricated into them, and since the splitter of the present invention can be considered as another type of "fluidic circuitry" element, the experimental analysis of the present invention was extended to investigate the impact that such a splitter could have if it were to be a part of the liquid flow path that is fabricated into a housing that allowed for the use of a rear-loading oscillator.

FIGS. 2A - 2B show, respectively, a quasi-perspective and a cross-sectional view of a preferred embodiment of the present invention **2** in the form of a rear-loading housing or enclosure **30** which has a front portion **32** into which has been molded a relatively large outlet **34** for the comparatively tall, upstream interaction chamber from which flows the liquid that issues from this outlet. A vertical **36** and a horizontal **38** splitter are used downstream of this outlet for effectively creating a two-tiered sprayer that has throats **40, 42, 44** and from which issue three component sprays, each of which has a centerline. The vertical splitter is seen to create a two-tiered (upper and lower spray components) pitched, output spray; while the horizontal splitter in its lower tier, similar to what we say in FIG. 1, imposes what we'll now refer to as a horizontal yaw angle on its right and left side component sprays.

Similarly to what was described in FIG. 1, the outlet's edges **46** serve to identify a herein defined oscillator outlet plane **48** that is generally perpendicular to the oscillator's centerline. The splitters' leading surfaces **50, 52** face generally in the upstream direction towards the interaction chamber and the splitters' front edges **54, 56** are situated a specified distance downstream of the outlet plane.

FIGS. 3A and 3B are, respectively, vertical and horizontal cross-sectional views of this housing and show the imposed splitter angles and an indication of the nature of the deflected or yawed component sprays from these lower throats.

Except for its interaction chamber not having the converging downstream sidewalls, the fluidic insert or oscillator **60** that is inserted into the rear of this housing is of a rather standard design.

It can be seen in FIGS. 2A- 2B that this embodiment has an outer surface which has a portion that is spherically shaped. This housing is configured as such so that it can be used as the adjustable ball or secondary housing which is inserted into the primary housing of a windshield washer assembly.

Another preferred embodiment of the present invention is the improved fluidic insert or oscillator **2** shown in FIGS.4A-4C which is effectively a two-tiered and triple throated version of the illustrative oscillator shown in FIG. 1. Shown in FIGS.4A-4C is a rectangular member that is molded or fabricated from plastic and has an especially-designed liquid flow channel or fluidic circuit fabricated into, in this instance, a first portion of its broader top surface (i.e., it could have been its bottom or side or some combination of these) and into which liquid flows from an inlet **62** in the insert's floor. This fluidic insert is of the type that is to be inserted into the cavity of a housing whose inner walls are configured to form a liquid-tight seal around the sidewalls of the insert.

This insert is seen to have a novel front wall **64** into which are molded an outlet **66** and a vertical **68** and horizontal **70** splitters. These split the flow into three throats **72, 74, 76.** Two power nozzles **80, 82** direct their flow into the oscillator's interaction chamber **84.**

Yet another embodiment of a fluidic insert or oscillator **2** shown in FIG 5. This oscillator utilizes a downstream, round-shaped splitter **86** to again create two effective yawed throats **88A, 88B,** with each issuing a component spray that has an imposed splitter yaw angle. The upstream fluidic circuitry is also different in that it takes the form of what is known as a "three-jet **90A, 90B, 90C** island **92"** oscillator as compared to the "two-jet" or "mushroom" oscillator shown in FIGS. 1-4.

The prior state of the art for better spray distribution from automotive windshield washer devices often involved the use of "double spray" inserts or nozzles (i.e., two fluidic circuits on one insert, with the bottom circuit distributing fluid over a wide pattern toward the lower portion of the windshield and the top circuit distributing the spray over a smaller pattern toward the upper portion of the windshield). The limits of available fluid flow and pressure on automotive vehicles often required that each of these circuits have smaller dimensions than those of the single circuit devices which they were replacing. However, this type of configuration presented performance problems since such smaller oscillators cannot perform as well as larger oscillators in higher viscosity fluids, such as cold washer fluid.

An advantage of the present invention is that it allows for the use of a larger dimensioned insert or oscillator (e.g., such as would be used in a single spray application) to distribute fluid like the smaller oscillators used in the double insert housings, see USPN 6,062,491. The larger dimensioned inserts of the present invention offer significantly improved spray patterns, such as the use of a vertical splitter to create a two-tiered spray, with its upper and lower pitched, component sprays, or the use of a horizontal splitter to create right-side and left-side yawed component sprays.

The foregoing is considered as illustrative only of the principles of the invention. Accordingly, all suitable modifications and equivalents of the present disclosure may be resorted to and still considered to fall within the scope of the invention as hereinafter set forth in claims to the present invention.

## Claims

1. Afluidic oscillator (2) that operates on a pressurized liquid flowing through said oscillator (2) to generate an oscillating spray of liquid droplets into a surrounding gaseous environment, said oscillator (2) of the type having a centerline, an interaction chamber (8) and a means for inducing oscillations in said liquid flowing through said chamber (8), said chamber (8) having sidewalls (10, 12) that extend downstream and converge towards said oscillator centerline so as to form an outlet (14) for said oscillator (2), wherein said fluidic oscillator (2) comprises:
a splitter (22) having a generally flat surface with a first (26) and second (28) edge, said surface facing generally in the upstream direction towards said interaction chamber (8),
wherein said oscillator outlet (14) having a first (16) and a second (18) edge, each of which are laterally spaced away from said oscillator centerline and serve to identify a herein defined oscillator outlet plane (20) that is generally perpendicular to said oscillator centerline,
said first splitter edge (26) situated a first specified distance (d1) downstream of said oscillator outlet plane (20) and said second splitter edge (28) situated a second specified distance (d2) downstream of said oscillator outlet plane (20),
said first splitter edge (26) cooperating with said outlet first (16) edge to cause a portion of the liquid that flows through said outlet to split into a first component spray that flows between said first splitter (26) and outlet (16) edges, said first component spray having a centerline that has a herein defined imposed, first splitter angle (γ₁) relative to said oscillator centerline, and
said second splitter edge (28) cooperating with said outlet second (16) edge to cause a portion of the liquid that flows through said outlet to split into a second component spray that flows between said second splitter (28) and outlet (18) edges, said second component spray having a centerline that has a herein defined imposed, second splitter angle (γ₂) relative to said oscillator centerline,
wherein, said imposed splitter angles (γ) are in the range of 5 to 45 degrees..

2. The fluidic oscillator as recited in Claim 1, wherein said splitter (22) is in the form of a horizontal splitter (38).

3. The fluidic oscillator as recited in Claim 1, wherein said splitter (22) is in the form of a vertical splitter (68).

4. The fluidic oscillator as recited in Claim 1, where said first and second splitter edge specified distances (d1, d2) downstream of said oscillator outlet plane are approximately equal.

5. The fluidic oscillator as recited in Claim 1, wherein said means for inducing oscillations in said liquid flowing through said chamber includes a power nozzle (4, 6).

6. The fluidic oscillator as recited in Claim 5, wherein a splitter yaw angle of 22.5 degree or 27.5 degree is imposed, wherein power nozzle and throat areas are 1.44 mm² and 1.22 mm² or 1.60 mm² and 1.07mm² and wherein an average exit velocity is 13.6 m/s or 15.6 m/s.

7. The fluidic oscillator as recited in Claim 4, wherein said utilized splitters in which d1 did not equal d2 and/or width w1 did not equal width w2 wherein width w1 is the distance from first splitter edge (26) to first outlet edge (16) and width w2 is the distance from second splitter edge (28) to second outlet edge (18).

8. The fluidic oscillator as recited in Claim 1, wherein the fluidic oscillator is in a form of a housing which has an configured front wall or face into which are molded a two-tiered and three-part throat comprising a single upper and two lower throats that are created by a splitter downstream of the interaction chamber's lower outlet plane followed by separate expansion passages, wherein the upper outlet having a fan angle of 60 - 120 degrees, wherein the lower outlet having a total overall fan angle (φ) of 140 - 160 degrees due to the splitter's imposed splitter yaw angle.

## Patentansprüche

1. Flüssigkeitsoszillator (2), der auf eine unter Druck stehende Flüssigkeit wirkt, die durch den Oszillator (2) fließt, um einen oszillierenden Sprühnebel von Flüssigkeitstropfen in einer umgebenden Gasumgebung zu erzeugen, wobei der Oszillator (2) des Typs eine Mittellinie, eine Wechselwirkungskammer (8) und ein Mittel zum Induzieren von Oszillationen in der Flüssigkeit hat, die durch die Kammer (8) fließt, wobei die Kammer (8) Seitenwände (10, 12) hat, die sich stromabwärts erstrecken und zur Mittellinie hin zusammenlaufen, um so einen Auslass (14) für den Oszillator (2) zu bilden,
wobei der Flüssigkeitsoszillator (2) umfasst:
einen Teiler (22), der eine im Allgemeinen ebene Oberfläche mit einer ersten (26) und zweiten (28) Kante hat, wobei die Oberfläche im Allgemeinen in die Stromaufwärtsrichtung zur Wechselwirkungskammer (8) hinweist,
wobei der Oszillatorauslass (14) eine erste (16) und eine zweite (18) Kante hat, von denen jede mit seitlichem Abstand von der Oszillator-Mittellinie angeordnet ist und zum Identifizieren einer hierin definierten Oszillator-Auslassebene (20) dient, die im Allgemeinen senkrecht zur Oszillator-Mittellinie ist,
die erste Teilerkante (26), die sich in einem ersten Abstand (d1) stromabwärts von der Oszillator-Auslassebene (20) befindet, und die zweite Teilerkante (28), die sich in einem zweiten bestimmten Abstand (d2) stromabwärts von der Oszillator-Auslassebene (20) befindet,
wobei die erste Teilerkante (26) mit der ersten (16) Auslasskante zusammenwirkt, um zu bewirken, dass ein Teil der Flüssigkeit, die durch den Auslass fließt, aufgespalten wird in einen ersten Komponenten-Sprühnebel, der zwischen den ersten Teiler- (26) und Auslasskanten (16) fließt, wobei der erste Komponenten-Sprühnebel eine Mittellinie hat, die einen hierin definierten festgelegten ersten Teilerwinkel (γ1) relativ zur Oszillator-Mittellinie hat, und
wobei die zweite Teilerkante (28) mit der zweiten Auslasskante (16) zusammenwirkt, um zu bewirken, dass ein Teil der Flüssigkeit, die durch den Auslass fließt, in einen zweiten Komponenten-Sprühnebel aufgespalten wird, der zwischen den zweiten Teiler- (28) und Auslass (18)-Kanten fließt, wobei der zweite Komponenten-Sprühnebel eine Mittellinie hat, die einen hierin definierten festgelegten zweiten Teilerwinkel (γ2) relativ zur Oszillator-Mittellinie hat,
wobei die festgelegten Teilerwinkel (γ) im Bereich von 5 bis 45 Grad liegen.

2. Flüssigkeitsoszillator nach Anspruch 1, wobei der Teiler (22) in der Form eines horizontalen Teilers (38) ist.

3. Flüssigkeitsoszillator nach Anspruch 1, wobei der Teiler (22) in der Form eines vertikalen Teilers (68) ist.

4. Flüssigkeitsoszillator nach Anspruch 1, wobei die ersten und zweiten festgelegten Teilerkanten-Abstände (d1, d2) stromabwärts von der Oszillator-Auslassebene annähernd gleich sind.

5. Flüssigkeitsoszillator nach Anspruch 1, wobei das Mittel zum Induzieren von Oszillationen in der Flüssigkeit, die durch die Kammer fließt, eine Druckdüse (4, 6) ist.

6. Flüssigkeitsoszillator nach Anspruch 5, wobei ein Teiler-Scherwinkel von 22,5 Grad oder 27,5 Grad festgelegt ist, wobei Druckdüsen- und Durchlassflächen folgende sind:
1,44 mm² bzw. 1,22 mm² oder 1,60 mm² bzw. 1,07 mm², und wobei eine durchschnittliche Austrittsgeschwindigkeit 13,6 m/s oder 15,6 m/s ist.

7. Flüssigkeitsoszillator nach Anspruch 4, wobei Teiler verwendet werden, bei denen d1 ungleich d2 ist und/oder die Breite w1 ungleich Breite w2 ist, wobei die Breite w1 der Abstand von der ersten Teilerkante (26) zur ersten Auslasskante (16) ist, und Breite w2 ist der Abstand von der zweiten Teilerkante (28) zur zweiten Auslasskante (18).

8. Flüssigkeitsoszillator nach Anspruch 1, wobei der Flüssigkeitsoszillator in einer Form eines Gehäuses ist, das eine konfigurierte Vorderwand oder -fläche hat, in die ein zweistufiger oder dreiteiliger Durchlass eingeformt ist, der umfasst:
einen einzelnen oberen und zwei untere Durchlässe, die durch einen Teiler stromabwärts von der unteren Auslassebene der Wechselwirkungskammer erzeugt werden, gefolgt von getrennten Ausdehnungsdurchlässen, wobei der obere Durchlass einen Fächerwinkel von 60 - 120 Grad haben, wobei der untere Auslass einen Gesamtfächerwinkel (Φ) von 140 - 150 Grad aufgrund der durch die Teiler festgelegten Teiler-Scherwinkel hat.

## Revendications

1. Oscillateur fluidique (2) qui fonctionne sur un liquide sous pression s'écoulant à travers ledit oscillateur (2) afin de générer une pulvérisation oscillante de gouttes de liquide dans un environnement gazeux environnant, ledit oscillateur (2) étant du type ayant une ligne centrale, une chambre d'interaction (8) et un moyen pour induire les oscillations dans ledit liquide s'écoulant à ladite chambre (8), ladite chambre (8) ayant des parois latérales (10, 12) qui s'étendent vers le bas et convergent vers ladite ligne centrale d'oscillateur afin de former une sortie (14) pour ledit oscillateur (2),
dans lequel ledit oscillateur fluidique (2) comprend :
un séparateur (22) ayant une surface généralement plate avec un premier (26) et un second (28) bord, ladite surface étant généralement orientée dans la direction en amont vers ladite chambre d'interaction (8),
dans lequel ladite sortie d'oscillateur (14) ayant un premier (16) et un second (18) bord, dont chacun est latéralement espacé de ladite ligne centrale d'oscillateur et sert à identifier un plan de sortie d'oscillateur (20) défini à l'intérieur de ce dernier, qui est généralement perpendiculaire à ladite ligne centrale d'oscillateur,
ledit premier bord de séparateur (26) étant situé à une première distance spécifiée (d1) en aval dudit plan de sortie d'oscillateur (20) et ledit second bord de séparateur (28) étant situé à une seconde distance spécifiée (d2) en aval dudit plan de sortie d'oscillateur (20),
ledit premier bord de séparateur (26) coopérant avec ledit premier bord de sortie (16) pour amener une partie du liquide qui s'écoule à travers ladite sortie à se séparer en une première pulvérisation de composant qui s'écoule entre lesdits premiers bords de séparateur (26) et de sortie (16), ladite première pulvérisation de composant ayant une ligne centrale qui a un premier angle de séparateur (γ₁) imposé défini à l'intérieur de cette dernière par rapport à ladite ligne centrale d'oscillateur, et
ledit second bord de séparateur (28) coopérant avec ledit second bord de sortie (16) pour amener une partie du liquide qui s'écoule à travers ladite sortie à se séparer en une seconde pulvérisation de composant qui s'écoule entre lesdits seconds bords de séparateur (28) et de sortie (18), ladite seconde pulvérisation de composant ayant une ligne centrale qui a un second angle de séparateur (γ₂) imposé, défini à l'intérieur de cette dernière, par rapport à ladite ligne centrale d'oscillateur,
dans lequel, lesdits angles de séparateur imposés (γ) sont dans la plage de 5 à 45 degrés.

2. Oscillateur fluidique selon la revendication 1, dans lequel ledit séparateur (22) se présente sous la forme d'un séparateur horizontal (38).

3. Oscillateur fluidique selon la revendication 1, dans lequel ledit séparateur (22) se présente sous la forme d'un séparateur vertical (68).

4. Oscillateur fluidique selon la revendication 1, dans lequel lesdites première et seconde distances spécifiées (d1, d2) de bord de séparateur en aval dudit plan de sortie d'oscillateur sont approximativement égales.

5. Oscillateur fluidique selon la revendication 1, dans lequel ledit moyen pour induire des oscillations dans ledit liquide s'écoulant à travers ladite chambre comprend un injecteur principal (4, 6).

6. Oscillateur fluidique selon la revendication 5, dans lequel un angle de lacet de séparateur de 22,5 degrés ou 27,5 degrés est imposé, dans lequel l'injecteur principal et les surfaces de gorge sont de 1,44 mm² et 1,22 mm² ou bien de 1,60 mm² et 1,07 mm² et dans lequel une vitesse de sortie moyenne est de 13,6 m/s ou 15,6 m/s.

7. Oscillateur fluidique selon la revendication 4, dans lequel lesdits séparateurs utilisés dans lesquels d1 n'est pas égal à d2 et/ou la largeur w1 n'est pas égale à la largeur w2, dans lequel la largeur w1 est la distance allant du premier bord de séparateur (26) au premier bord de sortie (16) et la largeur w2 est la distance allant du second bord de séparateur (28) au second bord de sortie (18).

8. Oscillateur fluidique selon la revendication 1, dans lequel l'oscillateur fluidique se présente sous la forme d'un boîtier qui a une paroi ou face avant configurée dans laquelle sont moulées une gorge à deux niveaux et en trois parties comprenant une seule gorge supérieure et deux gorges inférieures qui sont créées par un séparateur en aval du plan de sortie inférieur de la chambre d'interaction suivies par des passages d'expansion séparés, dans lequel la sortie supérieure a un angle de dispersion de 60 - 120 degrés, dans lequel la sortie inférieure a un angle de dispersion global total (Φ) de 140 - 160 degrés en raison de l'angle de lacet de séparateur imposé du séparateur.
